# EUROPEAN PATENT APPLICATION

(11) **EP 1 351 540 A2**
(43) Date of publication of application: **08.10.2003**
(21) Application number: 03005855.6
(22) Date of filing: 15.03.2003
(51) Int. Cl.: H04Q 11/00

(54) **Upstream resource management propagation system and method for use in bufferless networks**

(30) Priority: 03.04.2002 US 115382
(71) Applicant: ALCATEL, 75008 Paris (FR)
(72) Inventor: Ozugur, Timucin, Garland, TX 75042 (US); Verchere, Dominque, 91659 Breuillet (FR)
(74) Representative: Dreiss, Fuhlendorf, Steimle & Becker

(57) **Abstract**

An Upstream Resource Management Propagation ("URMP") solution is described that advantageously provides an algorithmic technique for reducing congestion in a bufferless network, such as an OBS network, through use of a scalable backpressure method. In one embodiment, the URMP algorithm is triggered by a congested node, causing URMP packets carrying congestion control information to be propagated from the congested node along the path destined for the ingress edge router(s) for a group of congested LSPs established according to GMPLS. The congestion control information includes the number of congested LSPs, the number of wavelengths involved, the maximum peak burst size, and a synchronization object to synchronize the clock time of the ingress edge routers. The congestion control information is used to instruct each ingress edge router as to when to transmit the burst packet for the corresponding LSP. During congestion, the transmission of flows is changed from asynchronous to time-division multiplex ("TDM") with a rate-control mechanism.

## Description

### BACKGROUND OF THE INVENTION

### Technical Field of the Invention

The present invention generally relates to optical burst switching ("OBS") networks. More particularly, and not by way of any limitation, the present invention is directed to an Upstream Resource Management Propagation ("URMP") system and method for use in controlling congestion in an OBS network.

### Description of Related Art

The demand for Internet services has increased dramatically over the past several years. This increase is at least partially due to the rapid development of Internet and wireless data applications and the introduction of high-speed Digital Subscriber Lines ("DSL"). To support this ever-increasing demand, the amount of raw bandwidth available at fiber optic backbone links has been increased by several orders of magnitude. In current optical Internet implementations, IP routers are interconnected via synchronous optical network ("SONET")interfaces and wave division multiplex ("WDM") links according to G.709 digital wrapper standard. Data transmitted optically in this manner has to be switched electronically at each node, which dramatically reduces the efficiency of the optical network due to relatively slow electronic processing speed.

In an effort to eliminate the opto-electro-optic ("O/E/O") conversions, and thereby speed data transmission, next-generation optical systems are being designed as all-optical networks. The nodes of such an optical network avoid buffering, since there is currently no optical form of RAM available. Optical Wavelength Switching ("OWS") is a circuit-switch-based optical network technology that dedicates the entire bandwidth of a specific wavelength to a specific data flow. Because the dedicated circuit must be torn down before another data flow uses it, utilization is poor. More recently, two additional optical network technologies, each of which comprises an improvement to OWS, have been developed. These technologies are Optical Packet Switching ("OPS") and Optical Burst Switching ("OBS"). OPS provides a high utilization; however, it suffers from a high hardware implementation complexity.

In contrast, OBS provides burst-based switching, which is different from OWS and an alternative to OPS. OBS provides a higher utilization than OWS with a moderate hardware implementation complexity. OBS is a viable solution to terabit backbone networks because it allows switching of data channels entirely in the optical domain and performs resource allocation in the electronic domain. An OBS control packet and corresponding data burst packet, which precedes the control packet, are launched from an edge router at time instants separated by a offset time. Each control packet contains the information, such as a label, the length of the burst, and the offset time, required to route the corresponding data burst through the optical core backbone. The control packet is sent via out-of-band in-fiber control channels and is processed electronically at the controller of each of the optical cross-connects to make routing decisions, such as selection of an outgoing fiber and wavelength. The optical cross-connects are configured to switch the data burst, which is expected to arrive after a designated offset time. The data burst is then switched entirely in the optical domain, thereby removing the electronic bottleneck in the end-to-end path between the edge routers.

In an OBS network, a significant problem is caused by collision, which occurs when burst packets contend for the same outgoing interface at each node. If another wavelength is available, the burst packet is converted to this wavelength using wavelength converters at the node. If no wavelengths or Fiber Delay Lines ("FDL") are available, one burst succeeds in being transmitted and the rest of the bursts are dropped. The probability of the occurrence of a blocking event is referred to as Burst Blocking Probability ("BBP"), or Burst Dropping Probability ("BDP"). It has been demonstrated that the BBP may be well over 10 percent for a fully-utilized OBS network, depending on the number of wavelengths at each interface without FDLs, which help to ease the burst dropping.

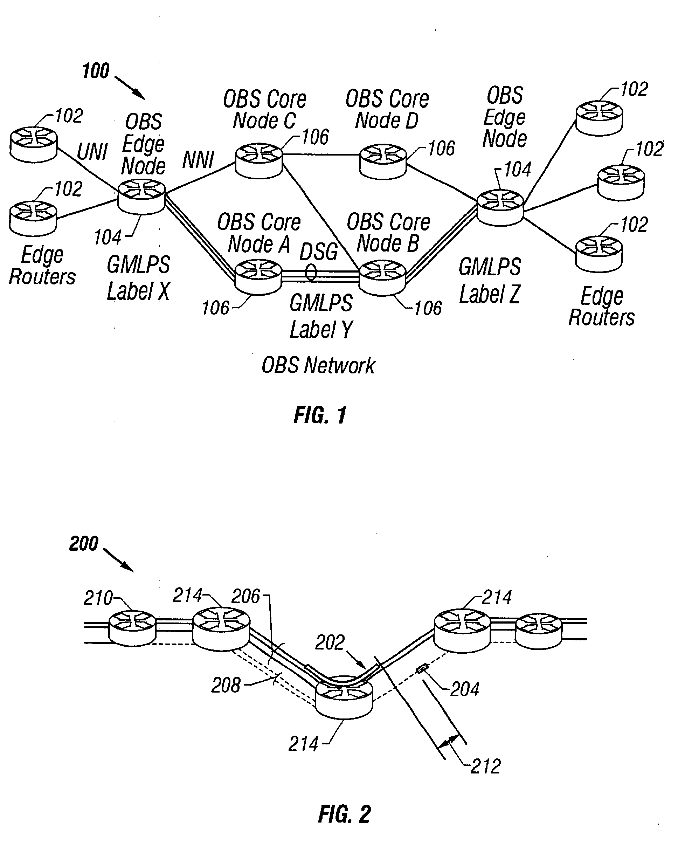

As best shown in FIG. 1, an OBS network 100 includes three primary components: one or more edge routers 102, one or more edge nodes 104, and one or more core nodes 106. Each edge router 102 is responsible for performing a burstification process in which many packets received from legacy interfaces, including, for example, "Packet over SONET" ("PoS"), Gigabit Ethernet, IP over ATM, and Frame Relay, are inserted into a burst packet. The edge nodes 104 and core nodes 106 have the same node architecture. The only difference between the nodes 104, 106, is in signaling; specifically, the edge nodes 104 are connected to the edge router 102 through a User-to-Network Interface ("UNI") and to the core nodes 106 through a Network-to-Network Interface ("NNI"). The edge nodes 104 may also support the interfacing to other networks, such as G.709.

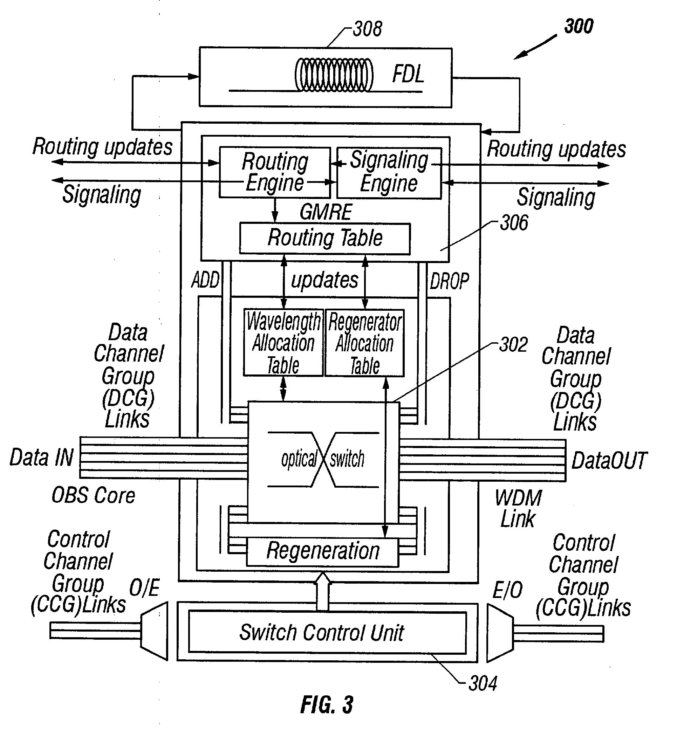

As previously indicated, OBS technology eliminates the O/E/O conversion for the burst packets; only the Burst Header Packet ("BHP") goes through O/E/O conversion. FIG. 2 is an alternative illustration of a portion of an OBS network 200. As shown in FIG. 2, a burst packet 202 and corresponding BHP 204 are transmitted via separate sets of channels, respectively designated a Data Channel Group ("DCG") 206 and a Control Channel Group ("CCG") 208. The channels of a DCG 206 and a CCG 208 may be physically carried on the same or different fibers. When the BHP 204 is transmitted from an edge router 210, the corresponding burst packet 202 is transmitted from the same edge router 210 after an offset time 212 has elapsed. The BHP 204 sets up a forwarding path before the burst 202 arrives at each node 214 along the path. Generally, the offset time 212 is just long enough to allow the BHP 204 to be processed at the OBS nodes 214 along the path.

FIG. 3 is a block diagram of an exemplary OBS node 300 in a Generalized Multi-Protocol Label Switching ("GMPLS") implementation for IP over OBS. As shown in FIG. 3, edge and core OBS nodes, such as the node 300, mainly consist of an optical switching matrix 302 and a Switch Control Unit ("SCU") 304. A GMPLS Routing Engine ("GMRE") 306 is also included in the case of GMPLS implementation for IP over OBS. The GMRE 306 provides GMPLS capabilities, such as routing and signaling to define a Label Switched Path ("LSP") based on an Explicit Route object ("ERO"). The burst follows this path throughout the OBS network. The OBS node 300 is referred to as an OBS Label Switched Router ("LSR") if GMPLS is employed.

A GMPLS control plane provides network planners with the ability to design inherently more flexible networks capable of self-adapting against the hostile characteristics of Internet traffic. Moreover, the main advantage of integrating GMPLS and OBS is that GMPLS control will reduce many of the complexities associated with defining and maintain a separate optical layer for OBS.

GMPLS in OBS uses labels associated with burst packets. In order to forward successive data bursts of the same LSP on different wavelengths in a given fiber, the label only specifies incoming-fiber-to-outgoing-fiber mapping. In other words, the GMPLS label binding is based on fiber interfaces. The burst packet can be converted to any available wavelength within the outgoing fiber interface mapped according to the label. If no wavelength is available, then FDLs 308 are used to delay the burst packet at the node 300.

The actual signaling for setting up, tearing down, and maintaining LSPs can be done either using label distribution protocols ("LDPs") or Resource Reservation Protocols ("RSVPs"). Network topology and network resource information required for traffic engineering are advertised using an augmented interior gateway protocol ("IGP") with appropriate extensions to its link state advertisement ("LSA") messages. It is advisable that the LSA messages in the OBS network carry burst profiles as well as the amount of allocated and free FDL capacity and burst profile, which may include information such as the average number and length of bursts and the average BCP/BDP, for example.

The primary problem in OBS networks is the BDP/BBP. As previously indicated, a burst packet is dropped at a congested OBS node if neither a wavelength nor an FDL is available. In the case of high network utilization, BDP can exceed 10 percent. Congestion control is the best solution for the burst dropping problem; however, there have to date been no proposals for congestion control in OBS networks. This is primarily due to the fact that, although OBS technology is based on packet switching technology, no queues are deployed at OBS nodes. When an OBS node receives a burst packet, the node converts the burst into an available outgoing wavelength and transmits it to the next hop, or link. The burst packet is not processed or buffered at the OBS nodes. Accordingly, existing congestion control algorithms, which are based on buffer management techniques, cannot eliminate congestion in bufferless networks, such as OBS.

One solution to the burst dropping problem in OBS networks is to match the number of wavelengths and LSPs in the network; that is, to allocate a separate wavelength for each LSP. This solution is very expensive and results in a waste of the unused portion of the bandwidth. Accordingly, the solution is generally regarded as unacceptable.

### SUMMARY OF THE INVENTION

The present invention comprises an Upstream Resource Management Propagation ("URMP") solution that advantageously provides an algorithmic technique for reducing congestion in a bufferless network, such as an OBS network, through use of a scalable backpressure method that adapts the data rate of the flows in the network and changes the transmission type thereof from asynchronous to time-division multiplex ("TDM") with a rate-control mechanism.

In one embodiment, the URMP algorithm is triggered by a congested node, causing URMP packets carrying congestion control information to be propagated from the congested node along the path destined for the ingress edge router(s) for a group of congested LSPs established according to GMPLS. Congestion may be defined as the number of blocked bursts for an LSP exceeding a threshold or the traffic load of a wavelength or wavelengths exceeding a target load (e.g., 80 percent), for example. The congestion control information includes the number of congested LSPs, the number of wavelengths involved, the maximum peak burst size, and a synchronization object to synchronize the clock time of the ingress edge routers. The congestion control information instructs each ingress edge router as to when to transmit the burst packet for the corresponding LSP.

In particular, synchronized ingress edge routers change their transmission type from asynchronous to slot-based TDM during the congestion period. Each cycle comprises a predetermined number of slots, which number is equal to the number of congested LSPs. The size of each slot is the maximum peak burst size. A transmission slot in each cycle is randomly assigned to each involved LSP. The number of slots assigned to a particular LSP within each cycle is limited to the ratio of the number of congested LSPs to the number of wavelengths involved.

The URMP algorithm establishes the transmission control between the congested node and the ingress edge routers. The congested node includes an ingress edge router in the URMP algorithm if any of the LSPs of that edge router participates in the congestion. In a Resource Reservation Protocol ("RSVP") backplane, URMP objects comprising the congestion control information are encapsulated into Resv and ResvErr messages propagating upstream and downstream, respectively. The Resv message, which includes the URMP object, sets up the URMP states at the OBS node along the path. Each node on the congestion path stores the congestion states of each involved LSP, which provides a scalability feature. Hence, the related congested LSPs may be merged. The congestion states are torn down or timed out similar to Resv and Path states in RSVP.

In one aspect, the invention comprises a method of controlling congestion in a bufferless communications network comprising a plurality of interconnected nodes comprising the steps of maintaining at each node congestion state information including congestion state data for each of a plurality of communications paths from an ingress edge router of the network to an egress edge router of the network that traverses the node; upon detection of a current congestion at a congested node determining a current congestion set comprising all communications paths identified as participating in the current congestion, updating congestion state information at the congested node, and sending congestion control information upstream to an ingress edge router identified as participating in the current congestion.

In another aspect, the invention comprises an apparatus for controlling congestion in a bufferless communications network comprising a plurality of interconnected nodes comprising means for maintaining at each node congestion state information including congestion state data for each of a plurality of communications paths from an ingress edge router of the network to an egress edge router of the network that traverses the node, and means for determining a current congestion set comprising all communications paths identified as participating in the current congestion, updating congestion state information at the congested node, and sending congestion control information upstream to an ingress edge router identified as participating in the current congestion upon detection of a current congestion at a congested node.

In one aspect, the invention comprises a method of controlling congestion in a bufferless communications network comprising a plurality of interconnected nodes, the method comprising the steps of maintaining at each node congestion state information including congestion state data for each of a plurality of communications paths from an ingress edge router of the network to an egress edge router of the network that traverses the node and, upon detection of a current congestion at a congested node, determining a current congestion set comprising all communications paths identified as participating in the current congestion, updating congestion state information at the congested node, and sending congestion control information upstream to an ingress edge router identified as participating in the current congestion.

In another aspect, the invention comprises an apparatus for controlling congestion in a bufferless communications network comprising a plurality of interconnected nodes comprising means for maintaining at each node congestion state information including congestion state data for each of a plurality of communications paths from an ingress edge router of the network to an egress edge router of the network that traverses the node and means for determining a current congestion set comprising all communications paths identified as participating in the current congestion, updating congestion state information at the congested node, and sending congestion control information upstream to an ingress edge router identified as participating in the current congestion upon detection of a current congestion at a congested node.

In another aspect, the invention comprises a system for controlling congestion in a fiber optic network comprising a plurality of interconnected nodes comprising congestion state information at each node including congestion state data for each of a plurality of Label Switched Path ("LSP") from an ingress edge router of the network to an egress edge router of the network that traverses the node, wherein upon detection of a current congestion at a congested node, the congested node determines a current congestion set comprising all LSPs identified as participating in the current congestion, updates congestion state information at the congested node; and sends congestion control information upstream to an ingress edge router identified as participating in the current congestion and wherein the upstream node uses the congestion control information to update the congestion state information at an upstream node along the LSP from the congested node to the ingress edge router.

### BRIEF DESCRIPTION OF THE DRAWINGS

A more complete understanding of the present invention may be had by reference to the following Detailed Description when taken in conjunction with the accompanying drawings wherein:

FIG. 1 illustrates a block diagram of an exemplary OBS network.

FIG. 2 illustrates a block diagram of a portion of an exemplary OBS network.

FIG. 3 illustrates an exemplary node of an OBS network.

FIG. 4 is a block diagram of a portion of an OBS network illustrating establishment of URMP states for congested LSPs along LSP paths in accordance with one implementation of the present invention.

FIGs. 5A and B collectively illustrate a flow diagram of a URMP algorithm in accordance with one implementation of the present invention.

FIGs. 6A-6C illustrate congestion merging in accordance with one implementation of the present invention in which two different OBS nodes along a single path are congested.

FIGs. 7A and 7B respectively illustrate various slot based transmission schemes in accordance with features of one implementation of the present invention.

FIG. 8 illustrates a network topology for use in a simulation study of the effectiveness of the URMP algorithm of one implementation of the present invention.

FIG. 9 is a burst traffic arrival model for each LSP used in a simulation study of the effectiveness of the URMP algorithm of one implementation of the present invention.

FIGs. 10-13 are charts illustrating results of a simulation study performed using the network topology of FIG. 8 and the burst traffic arrival model of FIG. 9.

### DETAILED DESCRIPTION OF THE DRAWINGS

In the drawings, like or similar elements are designated with identical reference numerals throughout the several views thereof, and the various elements depicted are not necessarily drawn to scale.

In a preferred implementation, the URMP algorithm of the present invention comprises four elements, including URMP state, URMP procedures, slot-based transmission, and URMP objects. URMP state stores all of the OBS nodes along the involving LSP paths indicating the congestion state of the LSP; this state is similar to Resv and Path states in RSVP. URMP procedures define the events anc congestion control procedures at the OBS nodes during the congestion. Slot-based transmission describes the transmission mechanism at the ingress edge router(s) during congestion. URMP objects define the information inserted into Resv and ResvErr messages to support the URMP algorithm. Each of the four elements will be described in greater detail below.

As previously indicated, the URMP algorithm establishes the transmission control between a congested node and ingress edge router(s) whose LSPs participate in the congestion. When an LSP is included in an URMP procedure (by virtue of the fact that it participates in congestion), the congested node creates a URMP State as ON mode for the LSP. The URMP state at the node also contains the label of the owner LSP of the URMP (i.e., the LSP that initiated the URMP algorithm), the number of hops, or links, from the owner node of the URMP (i.e., the node at which the URMP algorithm is initiated-0 represents the starting hop, or the "Ground Zero" hop, of the URMP algorithm), the number of LSPs included in the URMP, the number of wavelengths included in the URMP, and the bandwidth demand for the LSP. It should be noted that, instead of or in addition to including the number of hops from the owner node of the URMP, an ID of the Ground Zero node may be indicated.

When an OBS node triggers the URMP algorithm and its URMP state is already a non-zero URMP state, as described in greater detail below, the conclusion must be drawn that the Ground Zero of the congestion is downstream from this particular hop. The congested node has all of the necessary information in its URMP state to initiate the Resv and ResvErr messages. The currently congested OBS node, now designated an "Upstream Ground Zero" node, transmits a Resv message upstream destined for the involving ingress edge router(s) and also issues the ResvErr message downstream to the Ground Zero node. The Resv and ResvErr messages, which include the URMP object, set up the URMP states at the OBS nodes along the path for all involving LSPs. Each LSP has a URMP state at each OBS node that indicates the involvement of the LSP in any URMP procedure.

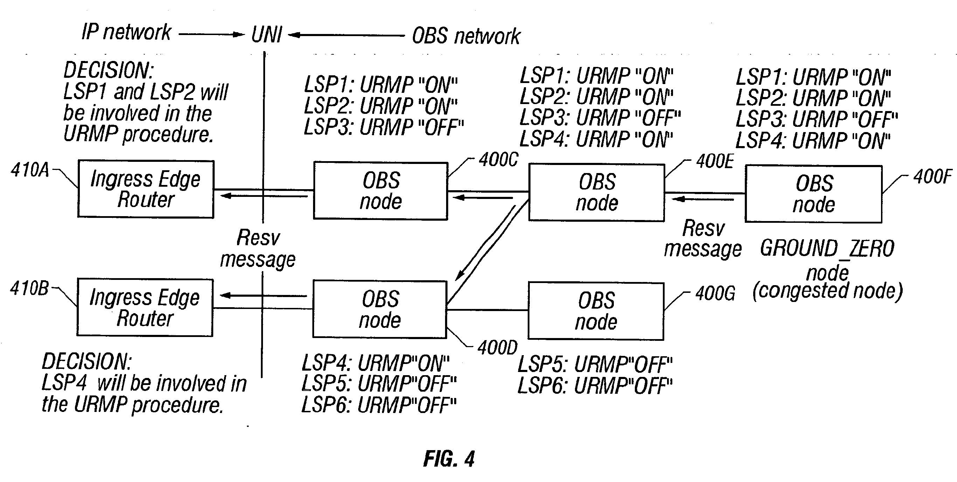

FIG. 4 illustrates propagation of a Resv message with the URMP object and setting up the URMP states for the involving LSPs on the path. It will be assumed for the sake of example that congestion first occurs at an OBS node 400F, which is referred to as the "Ground Zero" node. The LSPs involved in the congestion are LSP1, LSP2, and LSP4. The OBS node 400F issues a Resv message for LSP1, LSP2, and LSP4. An ingress edge router 410A serves LSP1 and LSP2 and an ingress edge router 410B serves LSP4. A Resv message for LSP1 and LSP2 follows a path comprising hops OBS node 400E and OBS node 400C and sets up the URMP states at these nodes for LSP1 (LSP1: URMP "ON") and LSP2 (LSP2: URMP "ON"). A Resv message for LSP4 follows a path comprising hops OBS node 400E and OBS node 400D and similarly sets up the URMP states at these nodes for the LSP4 (LSP4: URMP "ON"). The URMP states of the non-involved LSPs (i.e., LSP3, LSP5, and LSP6) are in the OFF mode (e.g., LSP5: URMP "OFF") at each node 400C-400G.

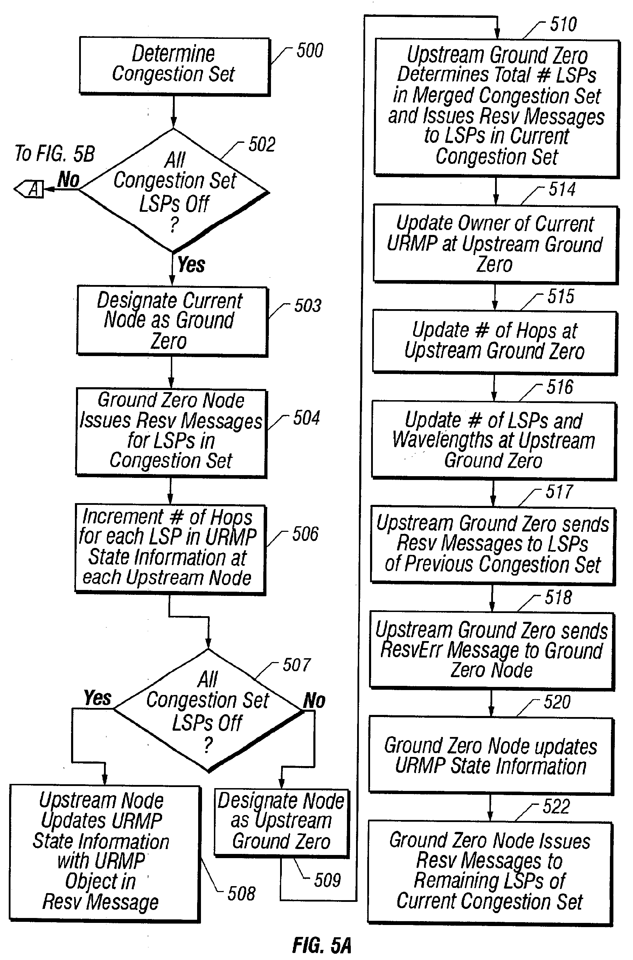

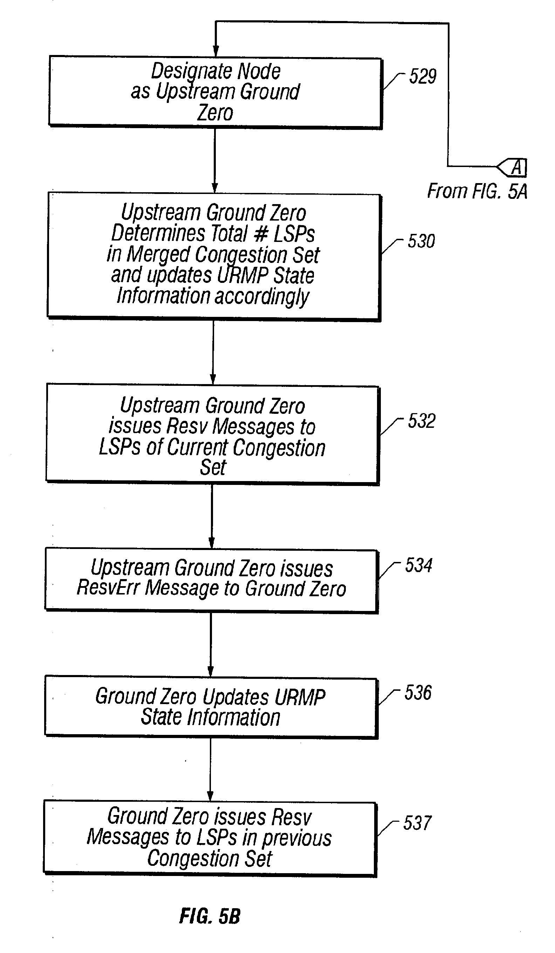

When an OBS node determines that any LSP is congested at that node, for example, because the number of blocked bursts for an LSP exceeds a threshold or the traffic load of a wavelength or wavelengths exceeds a target load (e.g., 80 percent), it initiates URMP procedures illustrated in FIGs. 5A and 5B. As shown in FIG. 5A, in step 500, the congested node determines the identity of the LSPs contributing to the congestion based on some LSP Distinguishing Procedures, such as those described in the above-noted related application, which is hereby incorporated by reference in its entirety. This set of such LSPs is referred to herein as a "congestion set". In step 502, a determination is made whether the URMP states of all of the LSPs in the congestion set as indicated in a URMP state information table for the congested node are in the OFF mode. If so, the currently congested hop is designated the Ground Zero hop for the current URMP procedure and the state information of the current node is updated (step 503). Execution then proceeds to step 504.

In step 504, the congested node issues Resv messages, which include the URMP objects for each LSP within the congestion set, upstream destined for the involving ingress edge router(s). As previously indicated, the URMP objects include the label of the owner LSP of the URMP, the number of hops to the Ground Zero node, and the number of LSPS and number of wavelengths included in the URMP.

The Resv messages are processed at each upstream node as follows. In step 506, the number of hops included in the URMP state information for each of the LSPs within the congestion set is incremented by one. In step 507, the URMP state of each LSP within the congestion set is checked and a determination is made whether the URMP state of any of the LSPs in the congestion set is in the ON mode, indicating a possible "Upstream Congestion Merging" situation. If not, execution proceeds to step 508, in which the node updates its URMP state information with congestion information contained in the URMP object in the Resv message.

If in step 507 it is determined that the URMP state of one or more LSPs within the congestion set is in the ON mode, the upstream node is designated an Upstream Ground Zero node (step 509) and the situation is referred to as Upstream Congestion Merging. In step 510, the Upstream Ground Zero node determines the total number of LSPs included in the combination of the previous and current congestion sets (the "merged congestion set") and propagates the new total number of LSPs in Resv messages to the LSPs in the current congestion set.

Additionally, the Upstream Ground Zero node updates the URMP state information of the LSPs of the previous congestion set as follows. First, in step 514, the owner of the current URMP procedure is indicated as being the downstream congested node. In step 515, the number of hops from the owner of the URMP is changed from zero to the number of hops received in the Resv message from the downstream congested node. In step 516, the number of LSPs (and wavelengths) included in the URMP procedure is changed to equal the new total number of LSPs (and wavelengths) after the merging occurs; i.e., the total number of LSPs and wavelengths in the merged congestion set. In step 517, Resv messages containing the updated URMP information are propagated to the LSPs of the previous congestion set.

In step 518, the Upstream Ground Zero node also issues ResvErr messages downstream destined for the new Ground Zero node of the current congestion. This ResvErr message includes the updated URMP object, including the new total number of LSPs and wavelengths. In step 520, when the Ground Zero node receives the ResvErr message, it updates its URMP state information and in step 522 the Ground Zero node issues a Resv message for the rest of the LSPs, that is, the LSPs in the current congestion set, which do not receive the new updated Resv message sent by the Upstream Ground Zero node in step 510.

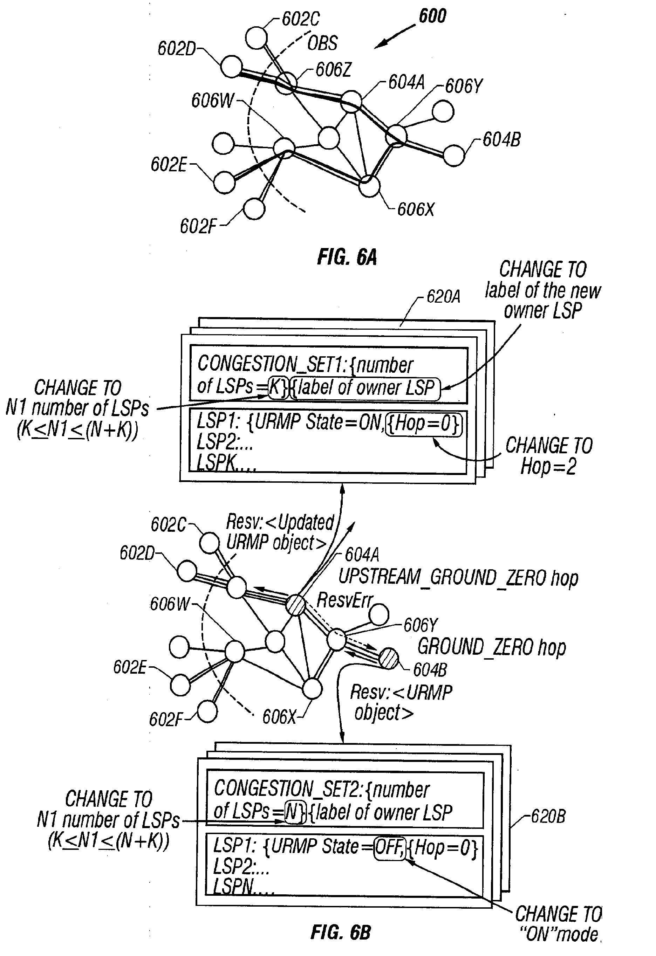

FIG. 6A illustrates two different congestion sets in an OBS network 600 prior to congestion merging in accordance with features of one implementation of the present invention. One congestion set (CONGESTION_SET1) comprises the LSPs between ingress edge router 602D and an OBS node 604A, along a path comprising a hop node 606Z, where the node 604A is the congested node. Another congestion set (CONGESTION_SET2) comprises the LSPs between an OBS node 604B and ingress edge routers 602C and 602D along paths including hops nodes 606Y, 604a, AND 606Z and between the OBS node 604B and ingress edge routers 602E and 602F along paths including hops nodes 606Y, 606X, and 606W, wherein a node 604B is the congested node.

FIG. 6B illustrates an Upstream Congestion Merging procedure with respect to the congestion sets illustrated in FIG. 6A as described above with reference to FIGs. 5A and 5B. It will be assumed for the sake of example that the node 604A is congested prior to the node 604B; accordingly, the node 604A may be referred to herein as the "previously congested node" and the node 604B may be referred to herein as the "currently congested node" or "newly congested node". URMP state information for the node 604A is designated by a reference numeral 620A; similarly, URMP state information for the node 604B is designated by a reference numeral 620B. It will be noted that, as shown in FIG. 6B, the two congestion sets (CONGESTION_SET1 and CONGESTION_SET2) have common LSPs (e.g., LSP1 and LSP2). CONGESTION_SET1 includes K LSPs; CONGESTION_SET2 includes N LSPs, where K and N are greater than zero. It will be assumed that when the node 604B starts the URMP procedure, the node 604A-related URMP procedure has already been completed.

When the node 604B distinguishes the LSPs contributing to the congestion, it first turns the URMP states of each of those LSPs, such as LSP1, to ON mode. For example, the URMP state in the URMP state information 620B for LSP1 is changed to ON mode. Next, the node 604B issues Resv messages with URMP objects upstream destined for the ingress edge routers 602C, 602D, 602E, and 602F. When the node 604A, which was previously the Ground Zero hop, receives a Resv message, it checks its URMP state information 620A for the URMP states of the LSPs identified in the URMP object (e.g., LSP1). The node 604A determines that the URMP state of the LSP1 is already in the ON mode. Accordingly, node 604A changes the information in the CONGESTION_SET1 such that the CONGESTION_SET1 label is changed to the label of the new owner LSP, the number of hops (to the Ground Zero hop) is changed from zero to two, and the number of LSPs is changed from K to N1, where K<N1<(K+N) and K and N are the number of congested LSPs at node 604A and node 604B, respectively. It will be recognized that, because the congestion sets include at least one common LSP (in this case, LSP1), the number of LSPs in the merged congestion set will be less than (K+N) when the congestions and congestion sets are merged.

The node 604A, now designated the "Upstream Ground Zero" hop, issues Resv messages including the updated URMP objects upstream destined for the ingress edge routers 602C and 602D. In this manner, URMP state information for nodes along the upstream path (in this case, node 606Z) are updated appropriately similar to the manner in which the URMP state information for node 604A was updated. Specifically, the number of LSPs and label of the owner LSP will be changed and the number of hops to the Ground Zero node will be incremented by two. Node 604A also issues a ResvErr message containing the updated URMP object downstream destined for the new Ground Zero node (node 604B). Accordingly, node 604B will update its URMP state information 620B, changing the number of LSPs from N to N1. The node 604B may also issue Resv messages with the new updated URMP objects upstream destined for the ingress edge routers 602E and 602F, thereby enabling the nodes 606Y, 606X, and 606W to update their respective URMP state information with the updated URMP information.

Referring again to FIG. 5A, in step 502, if one or more of the LSPs in the congestion set are in the ON mode, indicating that the current hop is not the Ground Zero hop and that there is already a congestion indication downstream, execution proceeds to step 529, in which the current node is defined as an Upstream Ground Zero node. This is referred to as a Downstream Congestion Merging situation.

In step 530, the most recently congested node merges the current congestion set with the congestion set already identified in its URMP state information to create a merged congestion set. In step 532, the node propagates this new total number of LSPs in Resv messages to all the LSPs within the current congestion set. It will be noted that the currently congested node changes neither the label of the congestion, which is the label of the previous owner LSP, nor the number of hops in its URMP state information.

In step 534, the currently congested node also issues a ResvErr message downstream destined for the Ground Zero node of the previous congestion. The ResvErr message includes the new updated URMP object, including the new total number of LSPs and wavelengths included in the congestion. In step 536, when the Ground Zero node receives the ResvErr message, it updates its URMP state information (specifically, the number of LSPs and wavelengths involved in the congestion) and in step 537, the Ground Zero node issues a Resv message for the rest of the LSPs in its original congestion set, which do not receive the new updated Resv message sent by the newly congested node.

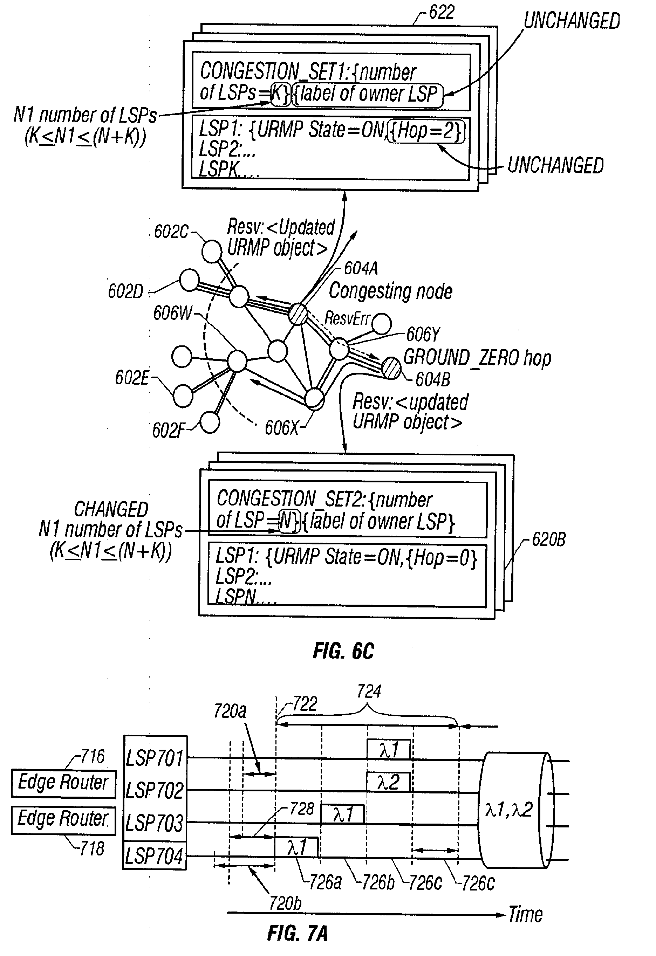

FIG. 6C illustrates a Downstream Congestion Merging procedure with respect to the congestion sets illustrated in FIG. 6A as described above with reference to FIG. 5. It will be assumed for the sake of example that the node 604B is congested prior to the node 604A. URMP state information for the node 604A is designated by a reference numeral 622A; similarly, URMP state information for the node 604B is designated by a reference numeral 622. It will be noted that, as shown in FIG. 6C, the two congestion sets (CONGESTION_SET1 and CONGESTION_SET2) have common LSPs (e.g., LSP1 and LSP2). CONGESTION_SET1 includes K LSPs; CONGESTION_SET2 includes N LSPs. It will be assumed that when the node 604A starts the URMP procedure, the node 604B-related URMP procedure has already been completed.

Upon a congestion indication at node 604A, the node first determines the identity of the LSPs in its congestion set and then determines the URMP states of the LSPs within the congestion set. In contrast to the Upstream Congestion Merging situation described above with reference to FIG. 6B, the number of hops information and the label of the owner LSP within the URMP information is not changed in the URMP state information 622A. The only information modified is the number of LSPs and the number of related wavelengths, which are changed to include the LSPs and wavelengths involved in the current congestion. Accordingly, the node 604A modifies the total number of LSPs from K to N1, where K<N1<(K+N) and K and N are the number of congested LSPs at node 604A and node 604B, respectively.

Next, the node 604A issues an Resv message, including the URMP objects, and transmits the message upstream to the ingress edge routers 602C and 602C. Node 604A also issues a ResvErr message destined for node 604B, which is the Ground Zero node of the merged congestion. Accordingly, node 604B may issue Resv messages for the ingress edge routers 602E and 602F with the new updated URMP objects.

It should be noted that the downstream-most node is always Ground Zero regardless of the congestion merging situation (i.e., downstream or upstream).

The congested node sends one Resv message for each congested LSP. Each Resv message only includes the related URMP object. In the case of high granularity, only one Resv message may be issued at the congested node, which includes a URMP object for each LSP in the same Resv message. In this case, a receiving node processes each URMP object. If the related LSP follows a different path., the node issues a new Resv message for this LSP.

In both Upstream Congestion Merging and Downstream Congestion Merging situations, the newly congested node sends a ResvErr message to the Ground Zero node. In either case, the more recently congested node issues only one ResvErr message. The ResvErr message is forwarded toward the Ground Zero node by using the generalized label of the owner LSP. At each node, when a ResvErr message with URMP object included therein is received, the node checks the label of the owner LSP. If the number of hops for the owner LSP is zero at the node, the node itself is the Ground Zero node and the node does not forward the ResvErr message. If the number of hops for the owner LSP is not zero at the node, it means that the node is not the Ground Zero node and the node forwards the ResvErr message downstream.

The Ground Zero node is responsible for refreshing the URMP states along the path by issuing Resv messages periodically. The same RSVP state updating rules may apply. If the node does not receive any Resv Refresh messages for k consecutive times, where k is some preselected number, the URMP states along the path are timed out. In general, the URMP stats related to this LSP are torn down when an LSP within the congestion set is torn down. If the Ground Zero node is timed out or torn down first, the upstream congested OBS nodes are responsible to keep their URMP states alive if the congestion persists. If the upstream node is timed out or torn down first, the node issues a ResvErr with a new URMP object destined for the Ground Zero node, with which the Ground Zero node updates its URMP information.

Three objects are defined to support the URMP algorithm, including a URMP object, a Path Synchronization ("PS") object, and a URMP Synchronization ("US") object. The URMP object includes the following fields:
- Label of the owner LSP
- Number of hops away from Ground Zero node
- Number of wavelengths included in the URMP
- Maximum Peak Burst Size ("MPBS")
- Total bandwidth demand by the involved LSPs.

The URMP object is inserted into Resv and ResvErr messages as described above.

The Label field defines the LSP that the object belongs to. The congested node also inserts the MPBS within the LSPs in the congestion set. The upstream congested node changes this value if there is any peak burst size greater than that received belonging to any LSP in its own congestion set. The other fields have been previously described above.

It should be noted that the foregoing description assumes that each LSP has only one unique label along the path from the congested OBS node to an ingress edge router. If this is not the case, i.e., if the LSPs have multiple labels along their respective paths, such as one label for each hop, the nodes along the path associate the incoming label and outgoing label for each LSP and swap labels. In this case, when a node receives an Resv message containing a URMP object, the node will swap the label of the "owner LSP" with the associated label for the "owner LSP" in its URMP state information.

In order to synchronize the ingress edge routers that are involved in the URMP process, the congested node needs to know the clock differences between itself and each involved ingress edge router. This is done by including PS object in the Path message during establishment of LSPs. The PS object includes the following fields:
- Label
- Clock Time
- Nodal Delay.

The ingress edge router inserts its clock time into the Clock Time field. The Nodal Delay is zero at the ingress edge router. Each receiving node on the LSP path adds its processing delay and the propagation delay to the value in the Nodal Delay field and then saves the result back in Nodal Delay field. Therefore, each node on the LSP path knows its clock difference from the ingress edge router by subtracting the value in the Nodal Delay field and the value in the Clock Time field from its own clock time.

When the congested node sends the URMP object, the n ode also inserts the US object into the Resv message. The US object includes the following fields:
- Label
- Clock Difference

The Label field defines the LSP to which the object belongs. The value stored in the Clock Difference field can be positive or negative, respectively indicating that the clock of the congested node is ahead of or behind the clock of the ingress edge router. The ingress edge router initiates the start of the slot-based transmission cycle at a time tₛ. In particular, tₛ=(MPBS+Clock+Clock Difference), where MPBS is the maximum peak burst size. The peak burst size of each LSP is a negotiation parameter during establishment of the LSP. This parameter should be stored at each node.

In accordance with one implementation of the present invention, when an ingress edge router receives a URMP object in a Resv message, it switches from asynchronous to slot-based transmission for the congestion-related LSPs. One "slot" is equal to the maximum transmission unit, which is equal to the MPBS, in the OBS network. Assume for the sake of example that the ingress edge router receives the URMP information such that the total number of LSPs and total number of associated wavelengths are N and M, respectively. Also, assume that the bandwidth demand for each LSP is α₁, where 1=1, 2,..., N. The ingress edge router may select one of two schemes. Scheme 1 consists of transmitting one burst belonging to a congestion-related LSP in one periodic cycle. This may be viewed as a slow-start mechanism and it dramatically decreases the number of bursts transmitted. Scheme 2 consists of transmitting α₁NM/Σᵢ₌₁^{N} α₁, where N«M, bursts to a congestion related LSP in one cycle.

Note that each periodic cycle has N slots. In some 1, the ingress edge router chooses a time slot randomly with a probability of 1/N. Therefore, the burst data rate for scheme 1 decreases by D/N, where D is the previous burst data rate. In scheme 2, the burst data rage decreases approximately to D/(N/M). This scheme is similar to slotted ALOHA protocol.

In order to ensure synchronization between the edge routers, the Resv message should also carry the synchronization object. Synchronization is necessary to guarantee the same periodic cycles among the ingress edge routers involved in the URMP algorithm.

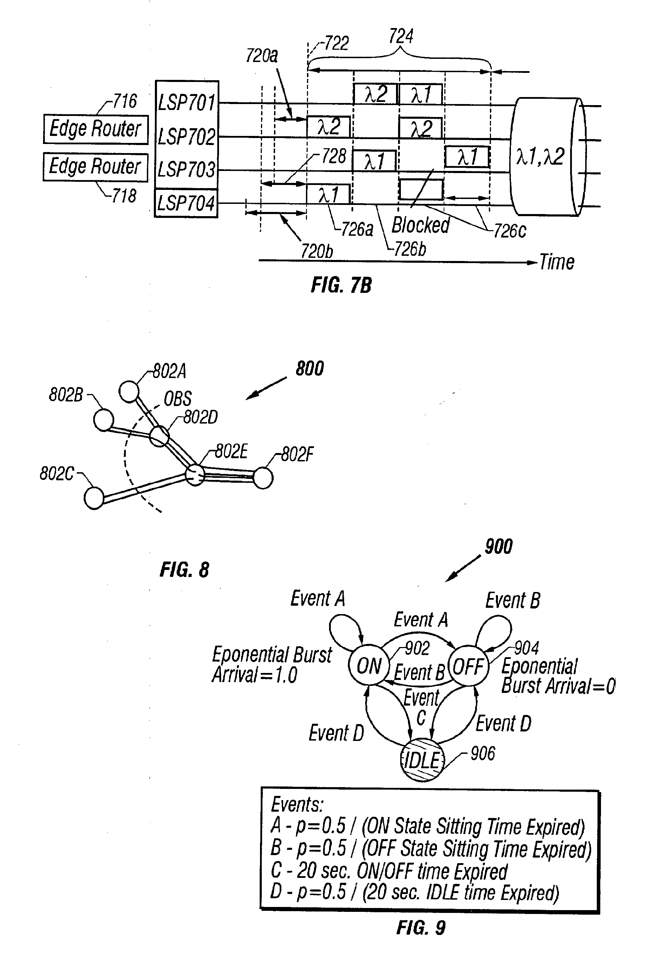

FIGs. 7A and 7B respectively illustrate application of a slot-based transmission scheme according to Scheme 1 and a slot-based transmission scheme according to Scheme 2. As shown in FIGs. 7A and 7B, four LSPs, designated LSP 701, LSP 702, LSP 703, and LSP 704, are contending for two new wavelengths λ1 and λ2 at a Ground Zero node. It will be assumed for the sake of example that all of the LSPs 701-704 have the same bandwidth demand and that two ingress edge routers 716 and 718 initiate three (LSP 701, LSP 702, and LSP 703) and one (LSP 704) LSPs respectively. Ingress edge routers 716 and 718 are informed of congestion according to the URMP procedures explained above. As previously indicated, the slot-based transmission may be accomplished according to one of two schemes.

Synchronization for the ingress edge router 716 occurs during a time period designated by reference numeral 720a. Correspondingly, synchronization for the ingress edge router 718 occurs during a time period designated by reference numeral 720b. Once the two ingress edge routers 716, 718 are synchronized, at a time designated by a reference numeral 722, a first slot-based transmission cycle 724 begins, followed by successive cycles. The slot-based transmission continues until the LSP that owns the congestion is torn down, similar to the Resv and Path state tear-down process in RSVP.

As previously indicated, each transmission cycle comprises N slots, where N is the number of LSPs involved. Accordingly, the transmission cycle 724 comprises four slots 726a-726d, the length of each of which is equal to the MPBS 728.

FIG. 7A illustrates application of a slot-based transmission according to Scheme 1. When Scheme 1 is applied, the BBP for the OBS network decreases dramatically. The burst rate decreases 1/N, where N is the number of LSPs involved in the procedure, in this case, four. One of the ingress edge routers 716, 718, selects a time slot for an appropriate one of the LSPs 701-704 with a probability of 1/N, where N is the number of LSPs involved.

FIG. 7B illustrates application of a slot-based transmission in an OBS network according to Scheme 2. Using this scheme results in a BBP that is reduced, but which is still slightly higher under the same circumstances than that of Scheme 1. The burst rate is a number of wavelengths times higher than Scheme 1. One of the ingress edge routers 716, 718, selects a time slot for an appropriate one of the LSPs 701-704 with a probability of 1/N, where N is the number of LSPs involved (i.e., four).

FIGs. 8-13 illustrate a simulation study performed to verify the efficacy of the implementation of the present invention described herein. FIG. 8 is a topological diagram of a portion of an OBS network 800 in which the URMP algorithm described herein, as well as a Shared Wavelength Group ("SWG") algorithm described in the aforementioned, commonly-assigned, co-pending application, which has been incorporated by reference, are implemented. As shown in FIG. 8, the network portion 800 includes three ingress edge routers 802A, 802B, and 802C. It will be assumed that 750 LSPs have been established. It will be further assumed that 250 of these LSPs run from the edge router 802A to core node 802F through nodes 802D and 802E, 250 of the LSPs run from the edge router 802B to core node 802F through nodes 802D and 802E, and the remaining 250 from the edge router 802C to core node 802F though the node 802E. Each fiber has 64 channels (wavelengths) with a capacity of 10 Gpbs. It will be further assumed that the network employs the JET scheme in which the resources of each node are reserved only for the duration of the burst.

FIG. 9 illustrates a burst traffic arrival model 900 for each LSP in the network 800 as used in a simulation study involving the network. The model 900 consists of three states, including an ON state, an OFF state, and an IDLE state, respectively designated by reference numerals 902, 904, and 906. The ON state 902 corresponds to an exponential burst arrival. The average burst arrival rate in this state 902 is defined to provide 100 percent link utilization for a link of 64 channels. Accordingly, the average arrival rate in the ON state 902 is approximately 88 burst packets per second for each LSP. The average arrival rate in the OFF state 904 is zero. The sitting time at each state 902, 904, is also exponentially distributed.

In the examples described hereinbelow, it will be assumed that the total of average sitting time in ON state 902 and OFF state 904 is one second. The average sitting time in the ON state 902 is between 0.5 and 0.9 seconds. Therefore, the average sitting time in the OFF state 904 is between 0.5 and 0.1 seconds. After the sitting time in one state 902, 904, elapses, the LSP switches to the other state 904, 902 with a probability of 0.5, or it stay in the same state with the same probability.

Each LSP spends the last 20 seconds of every 40 second period in the IDLE state 906. The reason for the IDLE state 906 is that the URMP algorithm makes each LSP queue build up, which creates an excessive queue size and event allocation problem in the simulation described herein. The IDLE state 906, therefore, is created to neutralize the LSP queues at the ingress edge routers. The sitting time in the IDLE state 906 is deterministic. When the 20 second IDLE period has expired, the LSP switches to the ON state 902 or the OFF state 904 with a probability of 0.5. The length of burst packets is also exponentially distributed. The average burst length is 18 Kbytes. The maximum and minimum burst length is 19 and 17 Kbytes. The slot time for the slot-based transmission period is defined as 19.01 Kbytes in order to carry the maximum length burst. The simulation run is 50,000,000 burst arrivals.

The following parameters are collected:
- Burst Blocking Percentage ("BBP")
- Average Burst Transmission Delay
- Number of RSVP packets with URMP objects (per second)

The average burst transmission delay includes the burst transmission delay, propagation delay, and channel access delay, which is due to slot-transmission scheme in URMP.

The network topology illustrated in FIG. 8 is first simulated without the URMP algorithm, using Fiber, SWG-32, and SWG-48. SWG-N means that an LSP is assigned only N number of wavelengths among 64 wavelengths. The same topology is then simulated with the URMP algorithm. A First-Fit algorithm is used to assign the wavelength within the Fiber or SWG-N.

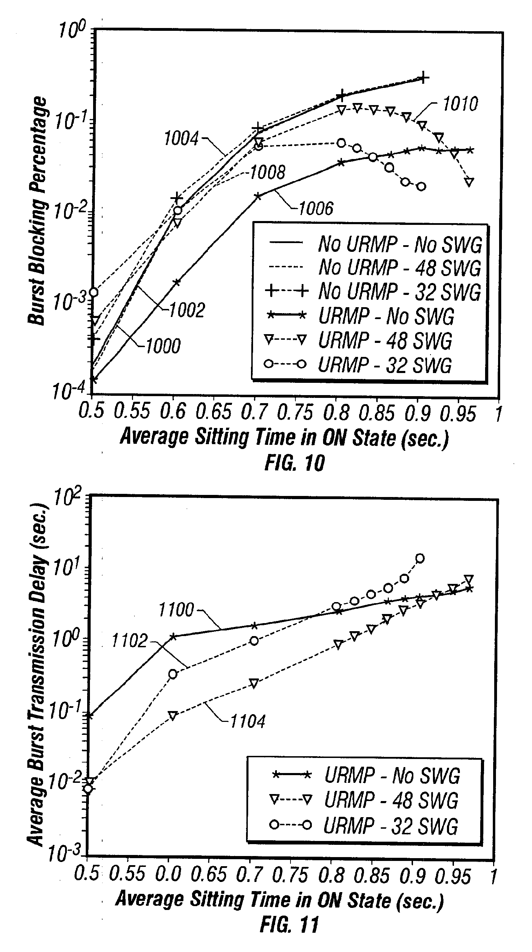

FIG. 10 illustrates the BBP versus the average sitting time in the ON state. FIG. 10 illustrates the average BBP both with and without the URMP algorithm. Where there is no URMP applied, the BBP for Fiber ("No URMP - No SWG") increases from 1.72 x 10⁻⁴ to 0.33 as the average sitting time in the ON state increases from 0.5 to 0.9, as illustrated by a line 1000. The SWG-48 with no URMP applied ("No URMP - 48 SWG") gives very similar results, as illustrated by a line 1002. The SWG-32 with no URMP applied ("No URMP - 32 SWG") introduces slightly higher BBP (3.93 x 10⁻⁴) for the average sitting time of 0.5, as illustrated by a line 1004. Note that most of the burst blocking occurs at the link between nodes E and F, since it carries all 750 LSPs. The link between nodes D and E carries 500 LSPs, and the rest of the links carry 250 LSPs.

When the URMP algorithm is applied, each LSP randomly selects 64 slots out of 750 slots and 64 channels without the SWG. The URMP with no SWG ("URMP-No SWG") gives approximately 5.5 percent of BBP as the system is fully loaded, as illustrated by a line 1006. In the SWG-N option, each LSP again randomly selects N slots out of 64 channels and some number of slots, which is equal to the number of LSPs involved in the process. Hence, the URMP with SWG-N introduces less BBP as the average sitting time increases due to the lesser amount of slots selected by the LSPs. As the average sitting time increases, the URMP with SWG-32 ("URMP - 32 SWG") and SWG-48 ("URMP - 48 SWG") yield BBPs of 2.1 and 2.4 percent, respectively, as illustrated by lines 1008 and 1010. However, the BBP for URMP-32 SWG reaches as high as 6.4 at the average sitting time of 0.8. The BBP reaches 15.68 percent for URMP-48 SWG at the average sitting time of 0.82. Moreover, the URMP-32 SWG and the URMP-48 SWG introduce BBPs of 1.33 x 10⁻³ and 6.49 x 10⁻ ⁴, respectively, at the average sitting time of 0.5. This is because as the average sitting time increases, the number of LSPs involved in the URMP process increases, resulting in an increase in the number of slots within the URMP period.

An increase in the number of slots allows the system to assign the slots more successfully to the LSPs. When the number of slots within the URMP period is small, the active LSPs contend for the same small number of slots. As previously indicated, each LSP selects 64 slots among 750 slots and 64 channels for the URMP without the SWG. If each LSP selects a lesser number of slots, such as 32 instead of 64, it decreases the BBP dramatically down to the degree of 10⁻⁷. However, on the other hand, it introduces a significant amount of burst delay even when the average sitting time is 0.5. The average burst transmission delay is unacceptably 6 seconds for the average sitting time of 0.5.

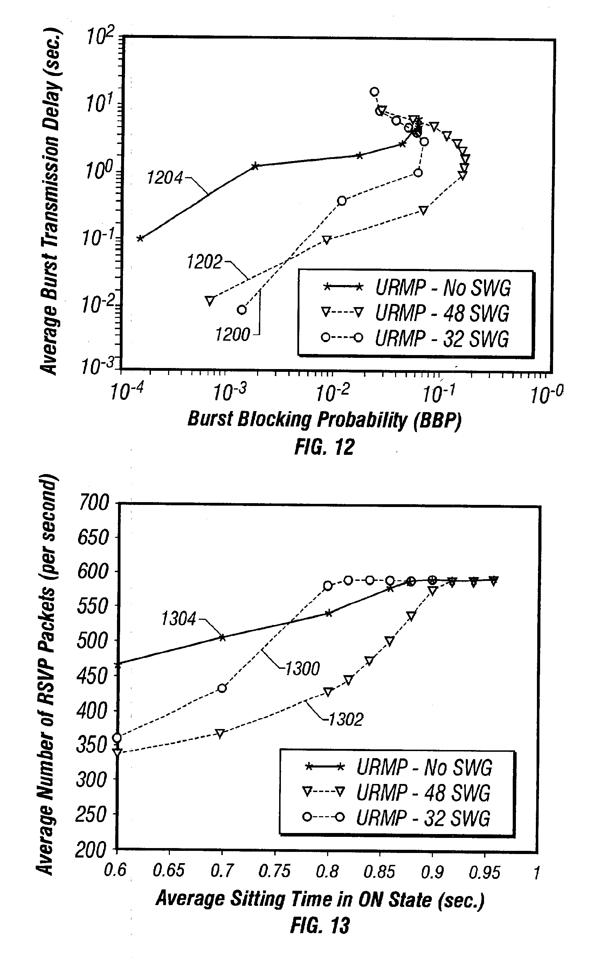

FIG. 11 illustrates the average burst transmission delay versus the average sitting time in the ON state. FIG. 12 illustrates the average burst transmission delay versus the BBP. The average burst transmission delay includes the burst transmission delay, propagation delay, and channel access delay, which is due to the slot-transmission scheme in URMP. The average burst transmission delay for the non-URMP system is 4.48 x 10⁻³, which only includes the transmission and propagation delays. Referring to FIG. 11, the URMP with Fiber ("URMP - No SWG") introduces higher delay up to the average sitting time of 0.8, as illustrated by a line 1100. The URMP with SWG-32 ("URMP - 32 SWG") introduces more delay, but decreases the BBP, as illustrated by a line 1102. The URMP with SWG-48 ("URMP - 48 SWG") introduces even more delays than the URMP - No SWG after the average sitting time exceeds 0.92, as illustrated by a line 1104.

Referring to FIG. 12, the SWG-32 ("URMP - 32 SWG"), as illustrated by a line 1200, introduces less delay than SWG-48 ("URMP - 48 SWG"), as illustrated by a line 1202, up to a BBP of 4 x 10⁻³. After this point, the SWG-32 introduces higher delay as the BBP increases. However, as the BBP starts declining again, the SWG-32 again introduces less delay than SWG-48. At approximately 2 percent, the SWG-32 again surpasses the SWG-48 in terms of delay. As the BBP increases to 5 x 10⁻², the URMP without SWG ("URMP - No SWG"), as illustrated by a line 1204, introduces the highest delay among the three arrangements. Briefly, the SWG-N arrangements introduce less delay when the traffic load is less and, when the load increases severely, the SWG-N arrangement decrease the BBP by introducing more delay.

FIG. 13 illustrates the average number of transmitted RSVP packets with the URMP object versus the average sitting time in the ON state. Note that it is assumed that the congested node issues an RSVP packet only for the active LSPs for the URMP-No SWG during this congestion period. For the SWG-32 and -48 ("URMP - 32 SWG" and "URMP - 48 SWG", respectively) arrangements, the results of which are respectively illustrated by lines 1300 and 1302, only an active LSP whose SWG group is 50 percent occupied by the active LSPs is included. The SWG-N schemes introduce fewer RSVP packets when the average sitting time is small. As the average sitting time exceeds approximately 0.76, the SWG-32 begins issuing more RSVP packets than the URMP - No SWG, the results of which are indicated by a line 1304. The reason for this is that during the IDLE time period, the URMP - No SWG empties the LSPs in its queues quickly. However, the SWG-32 cannot empty the queues, the edge routers keep issuing RSVP packets until all of the queues are empty, which is 20 seconds, or all of the IDLE period. As the average sitting time increases, all of the arrangements converge to the same number or RSVP packets, which is equal to the active LSPs.

Accordingly, it may be concluded that the URMP algorithm of the present invention provides several advantages over the prior art. First, the URMP algorithm provides means by which overlapped congestion may be merged into one congestion. Moreover, the algorithm synchronizes the ingress edge routers that contribute to the same congestion. By the beginning of the synchronization, the ingress edge routers switch their transmission types from asynchronous to slot-based transmission with a controlled data rate, thereby guaranteeing less burst collision/dropping. Finally, the congestion state continues until the LSP that owns the congestion is torn down, similar to the Resv and Path state tear-down process in RSVP.

Based upon the foregoing Detailed Description, it should be readily apparent that the present invention advantageously provides an innovative and efficient solution for providing congestion control in an OBS network. In particular, the invention provides a scalable backpressure method that adapts the data rate of the flows in an OBS network and changes the transmission type thereof from asynchronous to time-division multiplex ("TDM") with a rate-control mechanism responsive to detection of a congestion incident.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. A method of controlling congestion in a bufferless communications network comprising a plurality of interconnected nodes, the method comprising the steps of:
maintaining at each node congestion state information including congestion state data for each of a plurality of communications paths from an ingress edge router of the network to an egress edge router of the network that traverses the node; and
upon detection of a current congestion at a congested node:
determining a current congestion set comprising all communications paths identified as participating in the current congestion;
updating congestion state information at the congested node; and
sending congestion control information upstream to an ingress edge router identified as participating in the current congestion.

2. The method of claim 1 further comprising the step of:
using the congestion control information to update the congestion state information at an upstream node along the communications path from the congested node to the ingress edge router.

3. The method of claim 2 wherein the congestion state information maintained at each node comprises:
congestion state data for each communications path that traverses the node, the congestion state data for each communications path including an indication of whether the communications path is involved in a congestion control process and an identification of the node at which the congestion control process in which the communications path is involved originated; and
congestion set information including an indication of how many communications paths are involved in the congestion control process and an identity of an that initiated the congestion control process.

4. The method of claim 3 further comprising the steps of:
prior to the step of updating congestion state information at the congested node, determining whether any of the communications paths of the current congestion set are indicated as being involved in a congestion control process as indicated by the congestion state data for the communications path at the congested node;
if none of the communications paths of the current congestion set is indicated as being involved in a congestion control process, designating the congested node as a ground zero node; and
if any one of the communications paths of the current congestion set is indicated as being involved in a congestion control process, designating the congested node as an upstream ground zero node and sending a message containing updated congestion control information to a downstream node identified in the congestion state information of the congested node as a ground zero node of the congestion control process.

5. The method of claim 1 wherein the ingress edge router comprises a plurality of ingress edge routers, the method further comprising the steps of:
upon receipt of the congestion control information by the ingress edge routers, synchronizing the ingress edge routers; and
changing a transmission type of each of the ingress edge routers from asynchronous transmission to slot-based transmission with a controlled data rate.

6. System for controlling congestion in a fiber optic network comprising a plurality of interconnected nodes, the system comprising:
congestion state information at each node including congestion state data for each of a plurality of Label Switched Path ("LSP") from an ingress edge router of the network to an egress edge router of the network that traverses the node;
wherein upon detection of a current congestion at a congested node, the congested node determines a current congestion set comprising all LSPs identified as participating in the current congestion, updates congestion state information at the congested node; and sends congestion control information upstream to an ingress edge router identified as participating in the current congestion; and
wherein the upstream node uses the congestion control information to update the congestion state information at an upstream node along the LSP from the congested node to the ingress edge router.

7. The system of claim 6 wherein the congestion state information maintained at each node comprises:
congestion state data for each LSP that traverses the node, the congestion state data for each LSP including an indication of whether the LSP is involved in a congestion control process and an identification of the node at which the congestion control process in which the LSP is involved originated; and
congestion set information including an indication of how many LSPs are involved in the congestion control process and an identity of an that initiated the congestion control process.

8. The system of claim 7 wherein prior to updating congestion state information at the congested node, the congested node determines whether any of the LSPs of the current congestion set are indicated as being involved in a congestion control process as indicated by the congestion state data for the LSP at the congested node and, if not, the congested node is designated as a ground zero node; otherwise, the congested node is designated as an upstream ground zero node and sending a message containing updated congestion control information to a downstream node identified in the congestion state information of the congested node as a ground zero node of the congestion control process.

9. The system of claim 7 wherein the upstream node determines whether any of the LSPs of the current congestion set are indicated as being involved in a congestion control process as indicated by the congestion state data for the LSP at the upstream node and if not, the upstream node uses the congestion control information to update the congestion state information at the upstream node; otherwise, the upstream node updates the congestion control information using congestion state information of the upstream node, sends a message to the congested node containing the updated congestion control information, and sends a message to the ingress edge router containing the updated congestion control information.

10. The system of claim 6 wherein the ingress edge router comprises a plurality of ingress edge routers and wherein upon receipt of the congestion control information by the ingress edge routers, the ingress edge routers are synchronized with one another and each ingress edge router changes its transmission type from asynchronous transmission to slot-based transmission with a controlled data rate.
